# EUROPÄISCHE PATENTANMELDUNG

(11) **EP 1 078 830 A2**
(43) Veröffentlichungstag der Anmeldung: **28.02.2001**
(21) Anmeldenummer: 00117490.3
(22) Anmeldetag: 12.08.2000
(51) Int. Cl.: B60S 3/04

(54) **Verfahren zum Reinigen von Fahrzeugen**

(30) Priorität: 20.08.1999 DE 19939657
(71) Anmelder: WashTec Holding GmbH, 86153 Augsburg (DE)
(72) Erfinder: Mundil, Dietmar.W, 50259 Pulheim (DE)
(74) Vertreter: Rapp, Bertram

(57) **Zusammenfassung**

Die Erfindung befaßt sich mit einem Verfahren zum Reinigen von Fahrzeugen, insbesondere von Personenkraftwagen, bei dem Schaum und unter Hochdruck stehendes Wasser auf die Fahrzeugoberfläche einwirken. Während beim Stand der Technik Schaum aus größerer Entfernung mit nicht unerheblichem Schaumverlust auf die Oberfläche aufgesprüht wird, erfolgt durch die Erfindung das Einmassieren des Schaumes in die Oberfläche mit Hilfe von dichten vibrierenden Borstenspitzen, deren Dichte so groß ist, daß die Borsten beim Auftreffen auf die Fahrzeugoberfläche nicht über ein gewisses Maß hinaus seitlich abgebogen werden können.

## Beschreibung

Die Erfindung bezieht sich auf ein Verfahren zum Reinigen von Fahrzeugen, insbesondere von Personenkraftwagen, bei dem Schaum und unter Hochdruck stehendes Wasser auf die Oberfläche des Fahrzeuges einwirken.

Es ist bekannt, die Oberflächen von Fahrzeugen mit rotierenden Bürsten unter Wasserzugabe zu reinigen. Die verhältnismäßig langen Borsten dieser Bürsten hängen im Stillstand lose herab und richten sich erst unter Fliehkraft während der Rotation der Bürsten auf. Beim Auftreffen auf die Fahrzeugoberfläche werden die Borsten abgebogen und streifen somit längs der Oberfläche.

Bei solchen Anlagen ist es auch bekannt, Schaum auf die Fahrzeugoberfläche aufzubringen, um die Reinigungswirkung zu verstärken. Der Schaum wird hierbei aus größerer Entfernung aufgesprüht, wobei wegen dieser Entfernung gewisse Schaumverluste in Kauf genommen werden müssen.

Es ist schließlich bekannt, in bürstenlosen Waschanlagen das auf die Oberfläche aufgebrachte Reinigungsmittel, insbesondere Schaum, durch Wasser unter Hochdruck abzuspülen und damit auch den Schmutz abzutragen.

Der Erfindung liegt die Aufgabe zugrunde, die Schaumeinwirkung intensiver zu gestalten und einen größeren Wirkungsgrad hinsichtlich der Menge des aufgebrachten Schaumes zu erreichen.

Diese Aufgabe wird erfindungsgemäß durch ein Verfahren gelöst, bei dem der Schaum von dichten vibrierenden Borstenspitzen in die Oberfläche einmassiert wird. Hierbei erweist es sich als besonders zweckmäßig, wenn der Schaum zwischen den Borsten an die Oberfläche herangeführt wird, was aber nicht ausschließt, dass erst Schaum auf die Oberfläche aufgetragen und danach die Massage durch die Borstenspitzen vorgenommen wird.

Voraussetzung für den Erfolg dieses Verfahrens ist, dass die Borsten wie bei Pinseln oder Besen verhältnismäßig dicht am Borstenträger angeordnet und so gegen die Oberfläche angestellt sind, dass die Borsten tatsächlich mit ihren Borstenspitzen, ohne dass diese über ein bestimmtes Maß hinaus seitlich abgebogen werden, auf die Oberfläche einwirken.

In einem einfachen Ausführungsbeispiel ist es vorgesehen, dass die Borstenspitzen quer zur Borstenachse in eine oszillierende Schwingbewegung versetzt werden. Dabei sollen die Bürsten oder Borstenbündel mit ihren Borstenspitzen gegen die Oberfläche angedrückt werden, ohne dass die Borstenspitzen über ein gewisses Maß hinaus seitlich ausweichen.

Um diese Schwingbewegung der Borstenspitzen zu erreichen, empfiehlt es sich, die Borstenträger quer zur Borstenlängsachse mittels Schwingantrieben, z.B. Exzentern oder rotierenden Schwungmassen, in oszillierende Bewegungen zu versetzen.

Es ist aber auch der Einsatz von Schwingmagneten denkbar, mit deren Hilfe die Borstenspitzen sowohl gegen die Oberfläche als auch quer dazu in eine vibrierende Bewegung versetzt werden. Entscheidend ist hierbei, dass zwischen den Borstenspitzen und der Fahrzeugoberfläche eine Relativbewegung stattfindet, derart, dass die Borstenspitzen über die zu reinigende Fahrzeugfläche hinweggleiten.

Der durch das erfindungsgemäße Verfahren einmassierte Schaum sowie der gelöste Schmutz werden anschließend durch Wasser mit Hochdruck abgetragen. Damit ist die Erfindung anwendbar bei bürstenlosen Waschanlagen, die über Wasser mit Hochdruck verfügen.

Ebenso ist die Erfindung anwendbar vor einer Hochdruck-Vorwäsche bei herkömmlichen Waschanlagen.

Schließlich ist die Erfindung durch die Anwendung des erwähnten Verfahrens in einer Portalwaschanlage oder in einer Waschstraße gekennzeichnet.

Bei der Anwendung der Erfindung in Hochdruck-Portalanlagen wird der einmassierte Schaum aus zwei Seitendüsen und einer Dachdüse mit Wasser unter Hochdruck samt dem Schmutz abgetragen. In der Praxis hat sich gezeigt, dass sich durch das Einmassieren des Schaumes mit Hilfe der vibrierenden Borstenspitzen eine Intensivierung der Fahrzeugreinigung erreichen lässt, abgesehen davon, dass der Wirkungsgrad der Schaumzufuhr gesteigert werden kann, wenn der Schaum längs der Borsten bzw. zwischen den Borsten auf die Fahrzeugoberfläche aufgebracht wird.

## Patentansprüche

1. Verfahren zum Reinigen von Fahrzeugen, insbesondere von Pkw, bei dem Schaum und unter Hochdruck stehendes Wasser auf die Oberfläche des Fahrzeuges einwirken, dadurch **gekennzeichnet**, daß der Schaum von dichten vibrierenden Borstenspitzen in die Oberfläche einmassiert wird.

2. Verfahren nach Anspruch 1, dadurch **gekennzeichnet**, daß der Schaum zwischen den Borsten an die Oberfläche herangeführt wird.

3. Verfahren nach Anspruch 1 oder 2, dadurch **gekennzeichnet**, daß die Borstenspitzen quer zur Borstenachse in eine oszillierende Schwingbewegung versetzt werden.

4. Verfahren nach Anspruch 1 oder einem der folgenden, dadurch **gekennzeichnet**, daß Bürsten oder Borstenbündel mit ihren Borstenspitzen gegen die Oberfläche angedrückt werden, ohne dass die Borstenspitzen über ein gewisses Maß hinaus seitlich ausweichen.

5. Verfahren nach Anspruch 1 oder einem der folgenden, dadurch **gekennzeichnet**, daß die Borstenträger quer zur Borstenlängsachse mittels Schwingantrieben, z.B. Exzentern oder rotierenden Schwungmassen, in oszillierende Bewegungen versetzt werden.

6. Verfahren nach Anspruch 1 oder einem der folgenden, dadurch **gekennzeichnet**, daß der einmassierte Schaum sowie der gelöste Schmutz durch Wasser mit Hochdruck abgetragen werden.

7. Verfahren nach Anspruch 1 oder einem der folgenden, **gekennzeichnet** durch seine Anwendung vor einer Hochdruck-Vorwäsche.

8. Verfahren nach Anspruch 1 oder einem der folgenden, **gekennzeichnet** durch seine Anwendung in einer Portalwaschanlage oder in einer Waschstraße.
